# EUROPEAN PATENT APPLICATION

(11) **EP 1 231 662 A2**
(43) Date of publication of application: **14.08.2002**
(21) Application number: 02075102.0
(22) Date of filing: 14.01.2002
(51) Int. Cl.: H01M 8/06, C01B 3/38, C01B 3/32

(54) **Method and apparatus for controlling reformer temperature**

(30) Priority: 12.02.2001 US 781688
(71) Applicant: Delphi Technologies, Inc., Troy, MI 48007 (US)
(72) Inventor: Grieve, Malcolm James, Fairport, NY 14450 (US); Haltiner, Karl Jacob, Jr., Fairport, NY 14450 (US); Spencer, David Robert, Spencerport, NY 14559 (US)
(74) Representative: Denton, Michael John

(57) **Abstract**

A method of controlling temperature at a fuel reformer (22) comprises sensing the temperature at the fuel reformer (22) and adding air (48) to the fuel reformer (22). A dual air actuator system (100) for use with a fuel reformer (22) comprises air control valves (45, 46) in fluid communication with the fuel reformer (22) and a temperature sensor (72) in electrical communication with the air control valves (45, 46).

## Description

### BACKGROUND

Alternative transportation fuels have been represented as enablers to reduce toxic emissions in comparison to those generated by conventional fuels. At the same time, tighter emission standards and significant innovation in catalyst formulations and engine controls has led to dramatic improvements in the low emission performance and robustness of gasoline and diesel engine systems. This has certainly reduced the environmental differential between optimized conventional and alternative fuel vehicle systems. However, many technical challenges remain to make the conventionally-fueled internal combustion engine a nearly zero emission system having the efficiency necessary to make the vehicle commercially viable.

Alternative fuels cover a wide spectrum of potential environmental benefits, ranging from incremental toxic and carbon dioxide (CO₂) emission improvements (reformulated gasoline, alcohols, etc.) to significant toxic and CO₂ emission improvements (natural gas, etc.). Hydrogen has the potential as a nearly emission free internal combustion engine fuel (including CO₂ if it comes from a non-fossil source).

The automotive industry has made very significant progress in reducing automotive emissions. This has resulted in some added cost and complexity of engine management systems, yet those costs are offset by other advantages of computer controls: increased power density, fuel efficiency, drivability, reliability and real-time diagnostics.

Future initiatives to require zero emission vehicles appear to be taking us into a new regulatory paradigm where asymptotically smaller environmental benefits come at a very large incremental cost. Yet, even an "ultra low emission" certified vehicle can emit high emissions in limited extreme ambient and operating conditions or with failed or degraded components.

One approach to addressing the issue of emissions is the employment of fuel cells, particularly solid oxide fuel cells (SOFC), in an automobile. A fuel cell is an energy conversion device that generates electricity and heat by electrochemically combining a gaseous fuel, such as hydrogen, carbon monoxide, or a hydrocarbon, and an oxidant, such as air or oxygen, across an ion-conducting electrolyte. The fuel cell converts chemical energy into electrical energy. A fuel cell generally consists of two electrodes positioned on opposite sides of an electrolyte. The oxidant passes over the oxygen electrode (cathode) while the fuel passes over the fuel electrode (anode), generating electricity, water, and heat.

A SOFC is constructed entirely of solid-state materials, utilizing an ion conductive oxide ceramic as the electrolyte. A conventional electrochemical cell in a SOFC is comprised of an anode and a cathode with an electrolyte disposed therebetween. In a typical SOFC, a fuel flows to the anode where it is oxidized by oxygen ions from the electrolyte, producing electrons that are released to the external circuit, and mostly water and carbon dioxide are removed in the fuel flow stream. At the cathode, the oxidant accepts electrons from the external circuit to form oxygen ions. The oxygen ions migrate across the electrolyte to the anode. The flow of electrons through the external circuit provides for consumable or storable electrical power. However, each individual electrochemical cell generates a relatively small voltage. Higher voltages are attained by electrically connecting a plurality of electrochemical cells in series to form a stack.

The long term successful operation of a fuel cell depends primarily on maintaining structural and chemical stability of fuel cell components during steady state conditions, as well as transient operating conditions such as cold startups and emergency shut downs. The support systems are required to store and control the fuel, compress and control the oxidant and provide thermal energy management. A SOFC can be used in conjunction with a reformer that converts a fuel to hydrogen and carbon monoxide (the reformate) usable by the fuel cell. Three types of reformer technologies are typically employed (steam reformers, dry reformers, and partial oxidation reformers) to convert hydrocarbon fuel (methane, propane, natural gas, gasoline, etc) to hydrogen using water, carbon dioxide, and oxygen, respectfully, with byproducts including carbon dioxide and carbon monoxide, accordingly. These reformers are in an environment that has a wide range of temperatures (e.g., about -40°C to 800°C or greater).

### SUMMARY

A method of controlling temperature at a fuel reformer comprises sensing the temperature at the fuel reformer and adding air to the fuel reformer.

A dual air actuator system for use with a fuel reformer comprises air control valves in fluid communication with the fuel reformer and a temperature sensor in electrical communication with the air control valves.

The above-described and other features are exemplified from the following detailed description, drawings, and appended claims.

### BRIEF DESCRIPTION OF THE DRAWINGS

Referring now to the drawings, which are meant to be exemplary not limiting, and wherein like elements are numbered alike in the Figures.
Figure 1 is a schematic of an exemplary fuel cell system; and
Figure 2 is a schematic of a dual air actuator system.

### DESCRIPTION OF THE PREFERRED EMBODIMENT

To meet the needs of vehicles, fuel cells need to rapidly start, requiring an immediate source of fuel. Conventional fuels, such as gasoline, need to be reformed into acceptable SOFC fuels, such as hydrogen and carbon monoxide. The reforming process pretreats the fuel for efficient use by the fuel cell system. Since different types of fuel cell systems exist, including tubular or planar, any reference to components of a particular cell configuration are intended to also represent similar components in other cell configurations where applicable.

To facilitate the reaction in the fuel cell, a direct supply of fuel, such as hydrogen, carbon monoxide, or methane, is preferred. However, concentrated supplies of these fuels are generally expensive and difficult to supply. Therefore, the specific fuel can be supplied by processing a more complex source of the fuel. The fuel utilized in the system is typically chosen based upon the application, expense, availability, and environmental issues relating to the fuel.

Possible sources of fuel include conventional fuels such as hydrocarbon fuels, including, but not limited to, liquid fuels, such as gasoline, diesel, ethanol, methanol, kerosene, and others; gaseous fuels, such as natural gas, propane, butane, and others; and alternative fuels, such as hydrogen, biofuels, dimethyl ether, and others; and combinations comprising at least one of the foregoing fuels. The preferred fuel is typically based upon the power density of the engine, with lighter fuels, i.e., those which can be more readily vaporized and/or conventional fuels which are readily available to consumers, generally preferred.

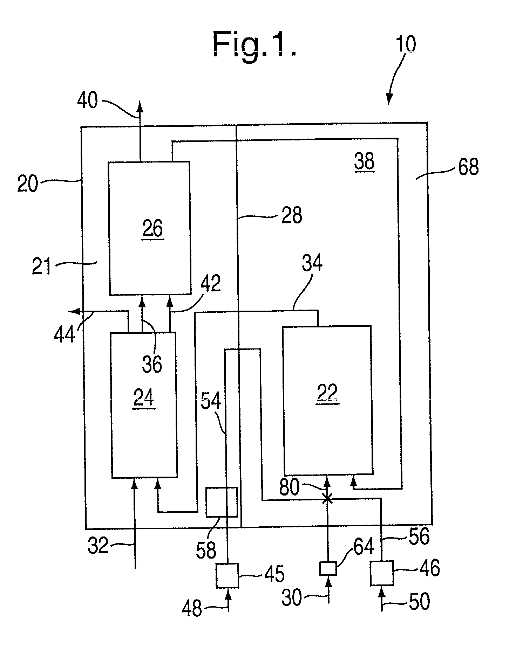

Referring to Figure 1, a fuel cell auxiliary power unit system 10 is schematically depicted. The auxiliary power unit system 10 comprises a fuel cell stack 24, preferably contained within an enclosure 20 for thermal management (also referred to as a "hot box"). Fuel cell stack 24 may also be separated from a fuel reformer 22 by a thermal wall 28 so that the temperature of reformer zone 68 can be kept at cooler temperatures than the operating temperature of the fuel cell system enclosure 21.

Fuel cell stack 24 produces a desired or predetermined amount of electrical power to the vehicle. Fuel cell stack 24, which may also comprise a plurality of modular fuel cell stacks, is in operable communication with fuel reformer 22. Fuel cell stack 24 is coupled to an air supply inlet 32 and a fuel injector 64 through fuel reformer 22. Fuel reformer 22 creates a reformate 34 for use by fuel cell stack 24. Fuel cell stack 24 uses reformate 34 to create electrical energy 44 and waste byproducts such as spent/unreacted fuel 36 and spent air 42. Thermal energy from the flow of unreacted and spent fuel 36 can optionally be recovered in a waste energy recovery system 26, which can recycle the flow of fuel 38 and waste heat, to fuel reformer 22 and can also discharge a flow of reaction products (e.g., water and carbon dioxide) 40 from the system. Alternatively, some or all of the unreacted and spent fuel 36 may be introduced to an engine (not shown) or a turbine (not shown) for energy recovery. Additionally, unreacted oxygen and other air constituents 42 can be discharged from fuel cell stack 24 and optionally consumed in waste energy recovery system 26. A cooling air, a purge air, or a combustion air (additional air not shown) may also be metered in waste energy recovery unit 26. Ultimately, electrical energy 44 is harnessed from the fuel cell stack 24 for use by a motor vehicle (not shown) or other appropriate energy sink.

One aspect of the auxiliary power unit system 10 is fuel reformer 22. The processing or reforming of hydrocarbon fuels is employed to provide a preferably immediate fuel source for rapid start up of the fuel cell as well as protecting the fuel cell by removing impurities. Fuel reforming can be used to convert a hydrocarbon (such as gasoline) or an oxygenated fuel (such as methanol) into hydrogen (H₂) and byproducts (e.g., carbon monoxide (CO), carbon dioxide (CO₂), and water). Common approaches include steam reforming, partial oxidation, and dry reforming.

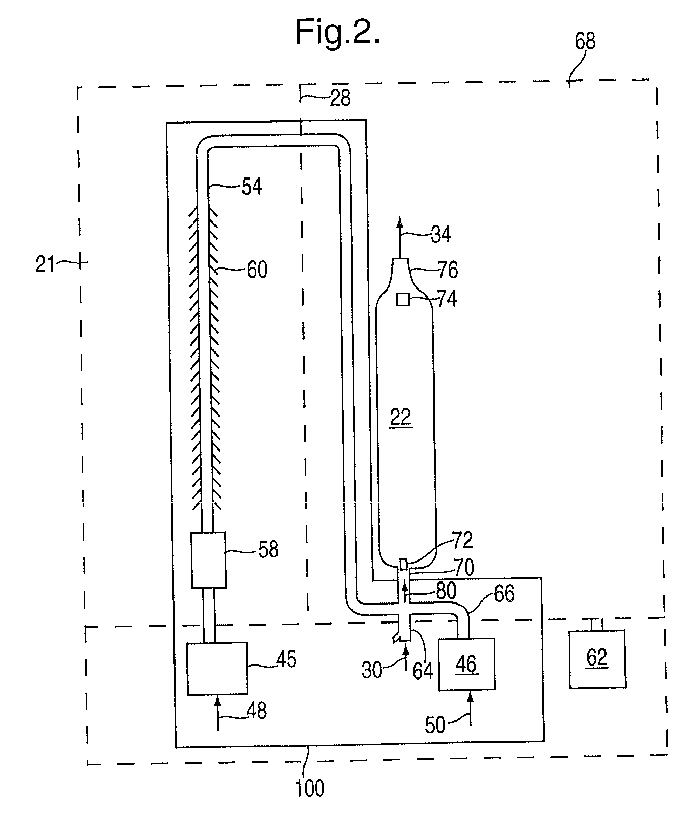

Referring to Figure 2, a dual air actuator system 100 is schematically depicted. Dual air actuator system 100 is coupled to fuel reformer 22 and allows air, which comprises first air 48 and second air 50, to be directed to an inlet 70 of fuel reformer 22. First air 48 and/or second air 50 mix with fuel 30 before entering fuel reformer 22 to create a mixed stream 80. Dual air actuator system 100 allows the temperature of mixed stream 80 to be controlled before mixed stream 80 enters fuel reformer 22.

Dual air actuator system 100 comprises an air control valve 45 that is in fluid communication with an inlet 70 of fuel reformer 22 via a pipe 54, tube, hose or other similar device that can transport air and the like. Air control valve 45 supplies first air 48 to fuel reformer 22. Pipe 54 may be directed through a micro-reformer 58, electrical resistive heater, or other type of start-up burner to heat first air 48 before it reaches inlet 70. Pipe 54 may also be directed through fuel cell system enclosure 21 to heat first air 48 by thermal exchange before first air 48 reaches inlet 70. Pipe 54 can comprise any material that can withstand the high temperatures within fuel cell system enclosure 21 and that can provide appropriate heat exchange to heat first air 48 (where fuel may be partially or fully combusted with first air 48) before it reaches fuel reformer 22. Pipe 54 may also be finned 60 to enhance thermal exchange.

Dual air actuator system 100 also comprises another air control valve 46 that is in fluid communication with inlet 70 of fuel reformer 22 via a pipe 56, tube, hose or other similar device that can transport air. Air control valve 46 supplies second air 50 to fuel reformer 22. Second air 50, which is preferably not preheated, can be delivered to fuel reformer inlet 70 at or slightly above ambient temperature.

In addition to air control valves 45, 56, fuel injector 64 is in fluid communication with inlet 70 of fuel reformer 22. Fuel injector 64 supplies fuel 30 to fuel reformer 22. First air 48 and/or second air 50 mix with fuel 30 before entering fuel reformer 22. A temperature sensor 72 is in thermal communication or disposed at inlet 70 of fuel reformer 22 so that the temperature of mixed stream 80 at inlet 70 can be monitored. Temperature sensor 72 is in operative communication with air control valves 45, 46 (e.g., electronic communication or the like). A temperature sensor 74 may also be disposed at an outlet 76 of fuel reformer 22. Temperature sensor 74 is also preferably in operative communication with air control valves 45, 46.

Optionally, a third air control valve 62 may also be disposed at reformer zone 68, which allows reformer zone 68 to be purged. Advantageously, air control valve 62 can be disposed in fluid communication with waste energy recovery system 26 (not shown in Figure 2) to provide another valve that could be utilized to provide an air supply to waste energy recovery system 26.

Referring to Figures 1 and 2, when auxiliary power unit system 10 is energized and the system is cold, e.g., about ambient temperature, various components of auxiliary power unit system 10 should be heated, preferably rapidly, to bring auxiliary power unit system 10 up to operating temperature. For example, fuel 30 should be heated to allow mixed stream 80 to reach a temperature that allows fuel 30 to vaporize as it is injected into fuel reformer 22. Thus, the temperature at inlet 70 of fuel reformer 22 should be heated to assist in heating fuel 30. If a controller (not shown) detects a temperature at temperature sensor 72 below a desired operating temperature (e.g., a temperature sufficient to vaporize the fuel), the controller operates air control valve 45 to introduce first air 48 through pipe 54 to micro-reformer 58. Temperature sensor 72 detects that the temperature at inlet 70 is below a temperature that allows fuel 30 to vaporize. Temperature sensor 72 sends a signal to controller (not shown), which in turn sends a signal to air control valve 45 to open and allow first air 48 to flow. Within, micro-reformer 58, the first air 48 is heated (e.g., by producing reformate, by burning fuel, or otherwise). By utilizing micro-reformer 58, first air 48 does not need to be initially heated by a separate electrical heating device, although electrical heating is another alternative. The heated air travels via pipe 54 into fuel reformer 22 where it raises the inlet temperature of fuel reformer 22 and fuel reformer 22 temperature.

Once the controller (not shown) detects that the temperature at inlet 70 has attained the desired temperature, fuel 30 can be mixed with the heated first air 48 and injected into the fuel reformer 22 where fuel 30 is reformed to reformate 34. Reformate 34 is subsequently directed to the fuel cell stack 24 where it is used in the production of electricity. After the initial start up and fuel cell stack 24 begins to radiate heat and heat the surrounding area. As a result, fuel cell system enclosure 21 will also begin to increase in temperature. Once fuel cell system enclosure 21 reaches a temperature sufficient to heat first air 48 via thermal transfer to the desired temperature (e.g., temperature of about 150°C or greater), micro-reformer 58 can be deactivated and/or reduced. In essence, once fuel cell system enclosure 21 begins to attain a sufficient temperature to heat first air 48, first air 48 can be heated via micro-reformer 58 and/or thermal transfer from fuel cell system enclosure 21, depending on the desired temperature at inlet 70. Once auxiliary power unit system 10 has attained desired operating temperature, the heating requirements for first air 48 are preferably met by thermal exchange of flowing first air 48 through fuel cell enclosure 21 via pipe 54, thereby recovering waste heat generated by fuel cell stack 24.

After first air 48 is heated and is directed to inlet 70 of fuel reformer 22, the temperature at inlet 70 of fuel reformer 22 may become too hot, e.g., may attain a temperature that allows fuel 30 to pre-react before introduction to fuel reformer 22 of catalyst. When the controller (not shown) detects that the temperature at temperature sensor 72 exceeds a desired level, temperature sensor 72 sends a signal to controller (not shown), which in turn signals air control valve 46 to open. Air control valve 46 opens and second air 50 begins to flow through pipe 56 to inlet 70 of fuel reformer 22. Second air 50 is cooler than first air and therefore, enables control of the temperature of mixed stream 80. Fuel 30 mixes with first air 48 and/or second air 50 providing for an optimum temperature of mixed stream 80 at inlet 70 of fuel reformer 22.

Optimum temperature is a high enough temperature so that fuel 30 can be fully vaporized as it is injected into fuel reformer 22 (e.g., preferably at least about 75% of the fuel is vaporized, with at least about 80% preferred, at least about 90% more preferred, and essentially full vaporization optimally preferred) and yet low enough so that fuel 30 does not begin to pre-react in the vaporized state prior to introduction to the catalyst. For example, the optimum temperature for gasoline as it enters the fuel reformer 22 is greater than about 200°C so that it fully vaporizes and yet lower than about 350°C so that it does not pre-react prior to introduction into the catalyst.

One advantage of dual air actuator system 100 is that the temperature at inlet 70 of fuel reformer 22 can be regulated. If fuel 30 does not completely vaporize, deposition of carbon can occur upon the catalyst adversely affecting the efficiency of fuel reformer 22 and reducing the life of fuel reformer 22. By adding hot air at inlet 70 of fuel reformer 22, the temperature can be quickly increased to prevent the deposition of carbon. If fuel 30 begins to pre-react, adding second air 50 to the fuel reformer 22 can quickly reduce the temperature at inlet 70 of fuel reformer 22, thereby inhibiting pre-reaction of fuel 30.

Another advantage of dual air actuator system 100 is that first air 48 and second air 50 help to maintain a stable, regular, uniform air/fuel ratio to provide efficiency in fuel reformer 22 and also to prevent coking and deposition of soot in fuel reformer 22. By preventing coking and deposition of soot, fuel reformer 22 has a longer life.

A further advantage of dual air actuator system 100 is that the addition of first air 48 and second air 50 allow fuel reformer 22 to operate at flow rates that promote efficiency in fuel reformer 22. If the temperature at inlet 70 of fuel reformer 22 is not controlled in order to avoid pre-reaction, the flow rate in the fuel reformer 22 will need to be faster than the flow rate that allows fuel reformer 22 to operate efficiently. However, because the temperature is controlled at inlet 70 to fuel reformer 22, the flow rate of mixed stream 80 can be dependent on reformate 34 needs of the fuel cell stack 24. In other words, the flow rate can be changed, increased or decreased, to enable the desired power output of fuel cell stack 24. The flow rate does not need to be dependent on the temperature requirements of fuel reformer 22 or on pre-reaction issues.

While preferred embodiments have been shown and described, various modifications and substitutions may be made thereto without departing from the spirit and scope of the invention. Accordingly, it is to be understood that the fuel reformer has been described by way of illustration only, and such illustrations and embodiments as have been disclosed herein are not to be construed as limiting to the claims.

## Claims

1. A method of controlling temperature at a fuel reformer (22) comprising:
sensing said temperature at said fuel reformer (22); and
adding a first air (48) to said fuel reformer (22).

2. A method in Claim 1, wherein said temperature is sensed at an inlet (70) of said fuel reformer (22).

3. A method in Claim 1, comprising heating said first air (48) upstream from said fuel reformer (22) to form a heated air.

4. A method in Claim 3, comprising burning a fuel to heat said first air (48).

5. A method in Claim 3, comprising heating said first air (48) with an electrical heating device.

6. A method in Claim 3, comprising heating said first air (48) by thermal exchange.

7. A method in Claim 6, further comprising radiatively heating said first air (48) with heat from a fuel cell stack (24).

8. A method in Claim 3, comprising adding a second air (50) that is cooler than said heated air.

9. A method in Claim 3, comprising mixing a sufficient amount of said heated air with a fuel upstream from an inlet (70) of said fuel reformer (22) to form a mixed stream (80).

10. A method in Claim 9, comprising adding a second air (50) that is cooler than said mixed stream (80).

11. A method in Claim 10, comprising controlling amount of said heated air and said second air (50) upstream from said inlet (70).

12. A method in Claim 1, further comprising purging a reformer zone (68).

13. A method of controlling temperature at a fuel reformer (22) comprising:
sensing said temperature at an inlet (70) of said fuel reformer (22);
heating a first air (48) upstream from said fuel reformer (22) to form a heated air;
mixing said heated air with a fuel upstream from said fuel reformer (22) to form a mixed stream (80); and
adding said mixed stream (80) to said fuel reformer (22).

14. A method in Claim 13, wherein said heating said first air (48) is by burning a fuel.

15. A method in Claim 13, comprising heating said first air (48) by an electrical heating device.

16. A method in Claim 13, wherein said heating said first air (48) is by thermal exchange.

17. A method in Claim 16, further comprising radiatively heating said first air (48) with heat from a fuel cell stack (24).

18. A method in Claim 13, comprising adding a second air (50) that is cooler than said heated air.

19. A method in Claim 18, further comprising mixing said second air (50) with said mixed stream (80).

20. A method in Claim 19, comprising controlling amount of said heated air and said second air (50) upstream from said inlet (70).

21. A method in Claim 13, comprising purging a reformer zone (68).

22. A dual air actuator system (100) for use with a fuel reformer (22) comprising:
an air control valve (45) in fluid communication with said fuel reformer (22), wherein said air control valve (45) supplies a first air (48); and
a temperature sensor (72) in thermal communication with an inlet (70) of said fuel reformer (22) and in operable communication with said air control valves (45).

23. A dual air actuator system (100) in Claim 22, wherein there are at least two air control valves (45, 46).

24. A dual air actuator system (100) in Claim 22, further comprising a fuel injector (64) in fluid communication with said fuel reformer (22).

25. A dual air actuator system (100) in Claim 22, wherein said air control valve (45) is in fluid communication with said fuel reformer (22) via a micro-reformer (58).

26. A dual air actuator system (100) in Claim 22, wherein said air control valve (45) is in fluid communication with said fuel reformer (22) via an electrical heating device.

27. A dual air actuator system (100) in Claim 22, wherein said first air (48) is in thermal communication with a fuel cell system enclosure (21).

28. A dual air actuator system (100) in Claim 22, wherein said fuel reformer (22) is in operable communication with a fuel cell stack (24).

29. A method for producing electrical power at a fuel cell stack (24) comprising:
sensing said temperature at a fuel reformer (22), wherein said fuel reformer (22) is in operable communication with said fuel cell stack (24);
heating a first air (48) upstream from said fuel reformer (22) to form a heated air;
mixing said heated air with a fuel upstream from said fuel reformer (22) to form a mixed stream (80);
adding said mixed stream (80) to said fuel reformer (22), said mixed stream (80) having a flow rate;
producing a reformate (34) within said fuel reformer (22), wherein said reformate (34) has said flow rate;
introducing said reformate (34) to said fuel cell stack (24); and
producing said electrical power at said fuel cell stack (24).

30. A method for producing electrical power in Claim 29, wherein said heating said first air (48) is by burning a fuel.

31. A method in Claim 29, comprising heating said first air (48) by an electrical heating device.

32. A method for producing electrical power in Claim 29, wherein said heating said first air (48) is by thermal exchange.

33. A method for producing electrical power in Claim 32, further comprising radiatively heating said first air (48) with heat from a fuel cell stack (24).

34. A method for producing electrical power in Claim 29, comprising adding a second air (50) that is cooler than said heated air.

35. A method for producing electrical power in Claim 34, further comprising mixing said second air (50) with said mixed stream (80).

36. A method for producing electrical power in Claim 35, comprising adding a second air (50) that is cooler than said mixed stream (80).

37. A method for producing electrical power in Claim 35, comprising controlling amount of said heated air and said second air (50) upstream independently from said flow rate.

38. A method for producing electrical power in Claim 29, further comprising controlling said flow rate based on a desired amount of said electrical power.

39. A method for producing electrical power in Claim 29, comprising purging a reformer zone (68).

40. A dual air actuator system (100) for use with a fuel reformer (22) comprising:
means for sensing said temperature at said fuel reformer (22);
means for heating a first air (48) upstream from said fuel reformer (22) to form a heated air;
means for mixing said heated air with a fuel (30) upstream from said fuel reformer (22) to form a mixed stream (80); and
means for adding said mixed stream (80) to said fuel reformer (22).
